# EUROPEAN PATENT APPLICATION

(11) **EP 2 953 145 A1**
(43) Date of publication of application: **09.12.2015**
(21) Application number: 14746232.9
(22) Date of filing: 29.01.2014
(51) Int. Cl.: H01F 38/14, H02J 17/00

(54) **CONTACTLESS POWER TRANSMISSION DEVICE**

(30) Priority: 30.01.2013 JP 2013015068
(71) Applicant: Panasonic Intellectual Property Management Co., Ltd., Osaka-shi, Osaka 540-6207 (JP)
(72) Inventor: OMORI, Yoshiharu, Osaka-shi, Osaka 540-6207 (JP); BESSYO, Daisuke, Osaka-shi, Osaka 540-6207 (JP); FUJITA, Atsushi, Osaka-shi, Osaka 540-6207 (JP); SADAKATA, Hideki, Osaka-shi, Osaka 540-6207 (JP); KURIHARA, Hiroaki, Osaka-shi, Osaka 540-6207 (JP)
(74) Representative: Grünecker Patent- und Rechtsanwälte PartG mbB
(86) International application number: PCT/JP2014/000443
(87) International publication number: WO 2014/119296

(57) **Abstract**

A non-contact power transmission system according to the present invention transmits electric power from a power transmitting coil 12 to a power receiving coil 18 via a non-contact method by utilizing electromagnetic induction. At least one of the power transmitting coil 12 and the power receiving coil 18 includes first and second coils 31 and 32. A wire 30 is wound around the first coil 31. The second coil 32 is placed at at least one end of the winding axis of the first coil 31. Another the wire 30 is wound around the second coil 32. The second coil 32 is arranged such that magnetic fluxes generated along respective winding axes of the first and second coils 31 and 32 are oriented in opposite directions.

## Description

### TECHNICAL FIELD

The present invention relates to non-contact power transmission systems for charging, for example, electric propulsion vehicles such as electric vehicles and plug-in hybrid vehicles.

### BACKGROUND ART

PATENT DOCUMENT 1 discloses a conventional power transmitting coil or power receiving coil for a non-contact power transmission system. The coil includes a plurality of cores arranged at some intervals. The plurality of cores output lines of magnetic force filling gaps between themselves. Thus, those cores together function as a single core with an enlarged size, because the overall size of the core includes the sizes of the gaps. This feature allows for addressing the issue of misalignment between the power transmitting and receiving coils and reducing the sizes and weights of the coils.

PATENT DOCUMENT 2 discloses a power transmitting coil or power receiving coil including an H-shaped core having a narrowed portion wound with a coil. The spatial magnetic flux distribution between the power transmitting and receiving coils is determined by the shape of a portion of the core not wound with any coil. Thus, even when the width of the narrowed portion of the H-shaped core is reduced, magnetomotive force of the coil does not change. As a result, such a narrowed portion reduces the size and weight of the power transmitting coil or the power receiving coil.

PATENT DOCUMENT 3 discloses a power transmitting coil and a power receiving coil including an H-shaped core. A portion of the core not wound with any coil is disposed closer to the other core than another portion of the former core wound with the coil is. This reduces the distance between respective portions of the core not wound with any coil, thereby increasing the coefficient of coupling between the coils to improve power supply efficiency.

### CITATION LIST

### PATENT DOCUMENT

[PATENT DOCUMENT 1] Japanese Patent Publication No. 2010-172084
[PATENT DOCUMENT 2] Japanese Patent Publication No. 2011-50127
[PATENT DOCUMENT 3] Japanese Patent Publication No. 2012-151311

### SUMMARY OF THE INVENTION

### TECHNICAL PROBLEM

With respect to a conventional power transmitting coil or power receiving coil, the magnetic flux concentrates along the winding axis of the coil. Thus, if the winding axis of the coil is placed horizontally, the strength of a leakage magnetic field into the environment increases. In particular, an intense magnetic flux is diffused to the vicinity of an end of the core, thereby causing the problem of an even stronger leakage magnetic field into the environment.

The present invention addresses this conventional problem. It is an objective of the present invention to provide a non-contact power transmission system which reduces a leakage magnetic flux into the environment, even if the winding axis of a coil is placed horizontally.

### SOLUTION TO THE PROBLEM

A non-contact power transmission system according to the present invention transmits electric power from a power transmitting coil to a power receiving coil via a non-contact method by utilizing electromagnetic induction. At least one of the power transmitting and receiving coils includes a first coil wound with a wire, and a second coil placed at at least one end of a winding axis of the first coil and wound with a wire. The second coil is arranged such that magnetic fluxes generated along respective winding axes of the first and second coils are oriented in opposite directions.

With this configuration, the magnetic fluxes of the first and second coils are oriented in opposite directions. This cancels major horizontal components of the magnetic flux diffusing from the end of the first coil, thereby reducing a leakage magnetic flux into the environment.

### ADVANTAGES OF THE INVENTION

According to the present invention, the magnetic fluxes of the first and second coils are oriented in opposite directions. This cancels major horizontal components of the magnetic flux diffusing from the end of the first coil, thereby reducing a leakage magnetic flux into the environment.

### BRIEF DESCRIPTION OF THE DRAWINGS

[FIG. 1] FIG. 1 is a block diagram of a non-contact power transmission system according to an embodiment of the present invention.
[FIG. 2] FIG. 2 illustrates the appearance of a non-contact power transmission system according to an embodiment of the present invention.
[FIG. 3] FIG. 3 is a cross-sectional view of a power transmitting coil according to an embodiment of the present invention.
[FIG. 4] FIG. 4 illustrates the appearance of a power transmitting coil according to an embodiment of the present invention.
[FIG. 5] FIG. 5 illustrates magnetic flux vectors of a power transmitting coil according to an embodiment of the present invention.
[FIG. 6] FIG. 6 is a partial cross-sectional view of a power transmitting coil according to a first variation of the present invention.
[FIG. 7] FIG. 7 is a partial cross-sectional view of a power transmitting coil according to a second variation of the present invention.
[FIG. 8] FIG. 8 is a partial cross-sectional view of a power transmitting coil according to a third variation of the present invention.
[FIG. 9] FIG. 9 is a partial cross-sectional view of a power transmitting coil according to a fourth variation of the present invention.
[FIG. 10] FIG. 10 is a partial cross-sectional view of a power transmitting coil according to a fifth variation of the present invention.
[FIG. 11] FIG. 11 is a partial cross-sectional view of a power transmitting coil according to a sixth variation of the present invention.
[FIG. 12] FIG. 12 is a partial cross-sectional view of a power transmitting coil according to a seventh variation of the present invention.
[FIG. 13] FIG. 13 is a top view of a power transmitting coil according to another variation of the present invention.
[FIG. 14] FIG. 14 is a top view of a power transmitting coil according to yet another variation of the present invention.
[FIG. 15] FIG. 15 is a top view of a power transmitting coil according to still another variation of the present invention.
[FIG. 16] FIG. 16 is a partial cross-sectional view of a power transmitting coil according to another variation of the present invention.

### DESCRIPTION OF EMBODIMENTS

Embodiments of the present invention will now be described with reference to the drawings. Note that the following description of embodiments is not intended to limit the scope of the present invention.

### Embodiments

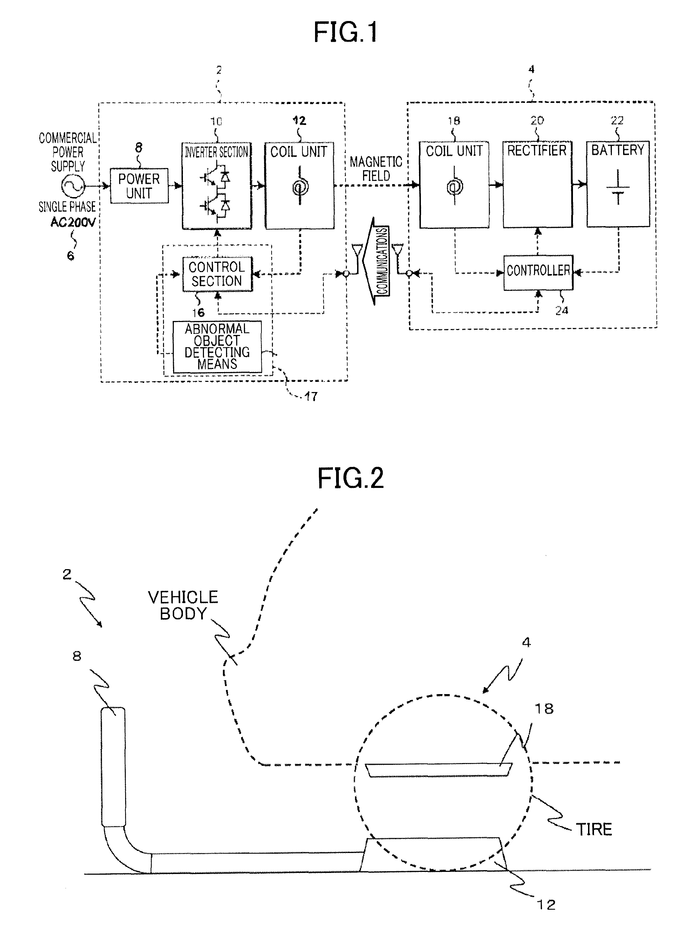

FIG. 1 is a block diagram of a non-contact power transmission system according to an embodiment of the present invention. FIG. 2 illustrates the appearance of the non-contact power transmission system when a vehicle is parked in a parking space.

As shown in FIGS. 1 and 2, the non-contact power transmission system includes a power supplier 2 in a parking space, and a power receiver 4 mounted on an electric propulsion vehicle.

The power supplier 2 includes a power unit 8, an inverter section 10, a ground-side coil unit (i.e., a power transmitting coil) 12, and a supplier-side controller (e.g., a microcomputer) 16. The power unit 8 is connected to a commercial power supply 6. The supplier-side controller 16 functions as the power control section 17. On the other hand, the power receiver 4 includes a vehicle-side coil unit (i.e., a power receiving coil) 18, a rectifier 20, a battery 22 as a load, and a receiver-side controller (e.g., a microcomputer) 24.

In the power supplier 2, the commercial power supply 6 is a low-frequency AC power supply of 200 V, and connected to the input terminal of the power unit 8. The output terminal of the power unit 8 is connected to the input terminal of the inverter section 10. The output terminal of the inverter section 10 is connected to the ground-side coil unit 12. On the other hand, in the power receiver 4, the output terminal of the vehicle-side coil unit 18 is connected to the input terminal of the rectifier 20. The output terminal of the rectifier 20 is connected to the battery 22.

The ground-side coil unit 12 is placed on the ground. The power unit 8 is set upright, for example, at a predetermined distance from the ground-side coil unit 12. On the other hand, the vehicle-side coil unit 18 is attached to, for example, the bottom of the vehicle (e.g., a chassis).

The supplier-side controller 16 communicates with the receiver-side controller 24. The receiver-side controller 24 determines a power command value in accordance with a detected residual voltage of the battery 22, and sends the determined power command value to the supplier-side controller 16. The supplier-side controller 16 compares the power to be supplied detected by the ground-side coil unit 12 with the received power command value, and drives the inverter section 10 so as to obtain the power command value.

As shown in FIG. 2, when power is supplied from the power supplier 2 to the power receiver 4, the vehicle-side coil unit 18 may be arranged to face the ground-side coil unit 12 by moving the vehicle as appropriate. The supplier-side controller 16 controls the inverter section 10 being driven to generate an RF electromagnetic field between the ground-side coil unit 12 and the vehicle-side coil unit 18. The power receiver 4 extracts electric power from the RF electromagnetic field to charge the battery 22 with the extracted electric power.

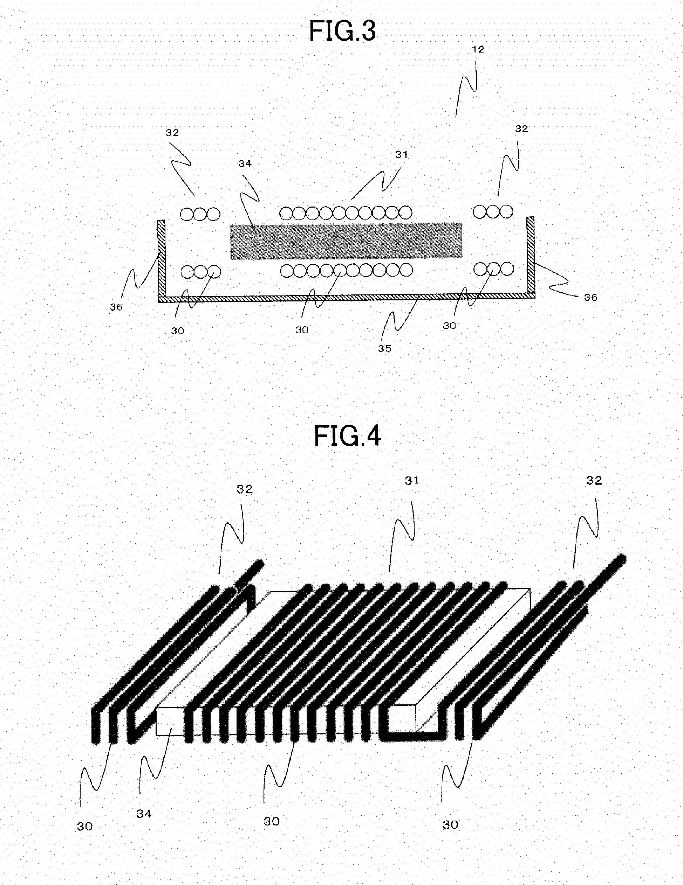

FIG. 3 is a cross-sectional view of the ground-side coil unit (i.e., the power transmitting coil) 12 in a non-contact power transmission system according to an embodiment of the present invention. The vehicle-side coil unit (i.e., the power receiving coil) 18 may have a similar configuration.

FIG. 4 illustrates the appearance of a coil according to this embodiment. The ground-side coil unit 12 includes a first coil 31 and second coils 32. The first coil 31 is comprised of a core 34 made of a magnetic material such as ferrite, and a wire 30 wound around the core 34. Each of the second coils 32 is configured as a wire 30.

The winding axes of the first and second coils 31 and 32 substantially agree with each other and both extend in the horizontal direction. The second coils 32 at both ends of the first coil 31 are two portion of the same wire 30 wound in mutually opposite directions.

An output from the inverter section 10 is transmitted to the wires 30 of the first and second coils 31 and 32 to generate a magnetic flux. The magnetic flux generated by the first coil 31 is transmitted through the core 34 and diffuses from an end of the core 34. Upward magnetic paths of the diffusing magnetic flux are used to generate, between the ground-side coil unit 12? and the vehicle-side coil unit 18 now located above, an RF electromagnetic field transmitting electric power.

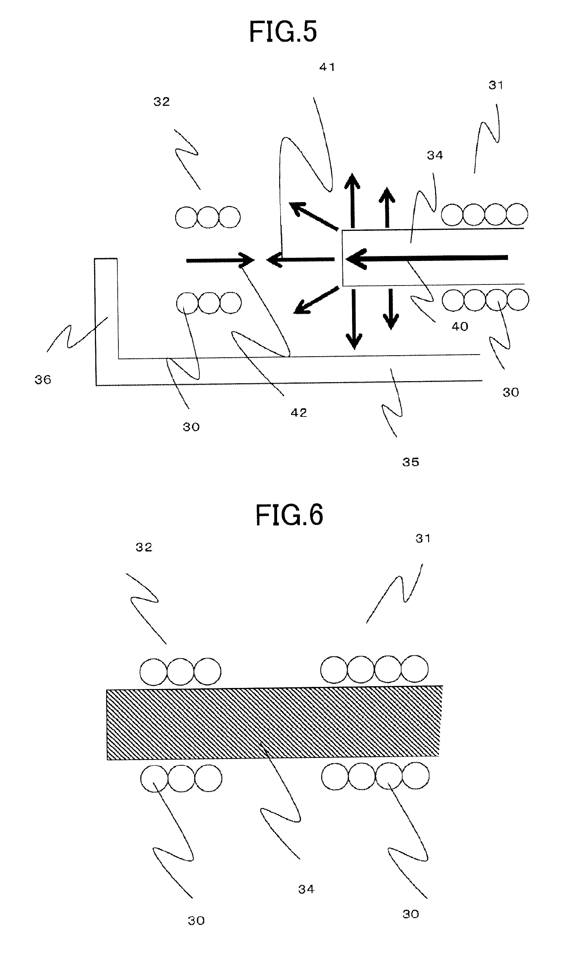

FIG. 5 illustrates magnetic flux vectors of each coil according to this embodiment. The magnetic flux 40 in the core 34, which has been generated by the wire 30, propagates through the core 34 toward the end of the core 34. In the air, the same magnetic flux density as in the magnetic body cannot be maintained. For that reason, the magnetic flux diffuses near the end of the core 34 in a direction in which the magnetic flux density decreases (e.g., the direction perpendicular to the surface of the core). Thus, most of the magnetic flux 40 in the core 34 diffuses from the vicinity of the end of the core 34. As a result, a leakage magnetic flux 41 particularly significantly increases along the winding axis of the coil (i.e., in the horizontal direction).

Since the wires 30 of the first and second coils 31 and 32 are wound in opposite directions, the magnetic flux 42 generated by the second coils 32 and the magnetic flux 40 generated by the first coil 31 are oriented in opposite directions. The opposite magnetic flux 42 generated in the reverse direction mainly cancels horizontal portions of the leakage magnetic flux 41 of the magnetic flux diffusing from the end of the core 34. That is, the second coils 32 work to reduce the leakage magnetic flux 41 along the winding axis of the first coil 31 (i.e., in the horizontal direction).

As shown in FIG. 3, in all directions but the upward direction pointing toward the vehicle-side coil unit 18, the coils 31 and 32 are covered with a non-magnetic plate 35 and non-magnetic walls 36 made of, for example, aluminum, to further reduce the leakage magnetic flux. The non-magnetic walls 36 are arranged at least to substantially face the winding axes of the first and second coils 31 and 32. Ordinarily, there is a risk that a non-magnetic plate or wall in a place with a significant leakage magnetic flux would generate a lot of heat. In this embodiment, however, the second coils 32 reduce the leakage magnetic flux 41 along the winding axis of the first coil 31. Thus, the non-magnetic plate 35 and the non-magnetic wall 36 may be provided there as magnetic shields with such generation of heat reduced.

In this embodiment, an example has been described where the wires 30 of the first and second coils 31 and 32 are wound in opposite directions and connected in series. In order to achieve the advantages of the present invention, however, as long as magnetic fluxes generated by the first and second coils 31 and 32 are oriented in opposite directions, their configuration does not have to be the one adopted in this embodiment.

That is to say, in the non-contact power transmission system according to this embodiment, at least one of the power transmitting coil 12 and the power receiving coil 18 includes the first and second coils 31 and 32. The wire 30 is wound around the first coil 31. The second coil 32 is placed at at least one end of the winding axis of the first coil 31. The wire 30 is wound around the second coil 32. The second coil 32 is arranged such that the magnetic fluxes generated along the winding axes of the first and second coils 31 and 32 are oriented in opposite directions.

The winding axes of the first and second coils 31 and 32 preferably substantially agree with each other. The wires 30 of the first and second coils 31 and 32 are wound in opposite directions.

Alternatively, the wires 30 of the first and second coils 31 and 32 may be wound in the same direction. In that case, currents flow in opposite directions through the wires 30 of the first and second coils 31 and 32. The wires 30 of the first and second coils 31 and 32 may be wound in the same direction, and the ends of the wire 30 of the first coil 31 are connected to the wires 30 of the second coils 32 in the opposite direction to allow currents to flow in the opposite directions. Even with this configuration, magnetic fluxes generated by the first and second coils 31 and 32 are oriented in opposite directions, thus achieving the advantage of reducing the leakage magnetic flux along the winding axis of the first coil 31.

Still alternatively, electric power may be separately supplied to the first coil 31 and the second coil 32 and the phases of currents to be supplied may be controlled to reduce the leakage magnetic flux along the winding axis of the first coil 31.

In this case, the first coil 31 is preferably formed by winding the wire 30 around the core 34. The first and second coils 31 and 32 are preferably wound with the same wire 30.

### First Variation

FIG. 6 illustrates that the core 34 extends to a second coil 32. In this configuration, the magnetic flux generated in the opposite direction by the second coils 32 increases as compared to the case where the second coils 32 have no core 34. This leads to a further reduction in the leakage magnetic flux 41 along the winding axis of the coil (i.e., in the horizontal direction).

### Second Variation

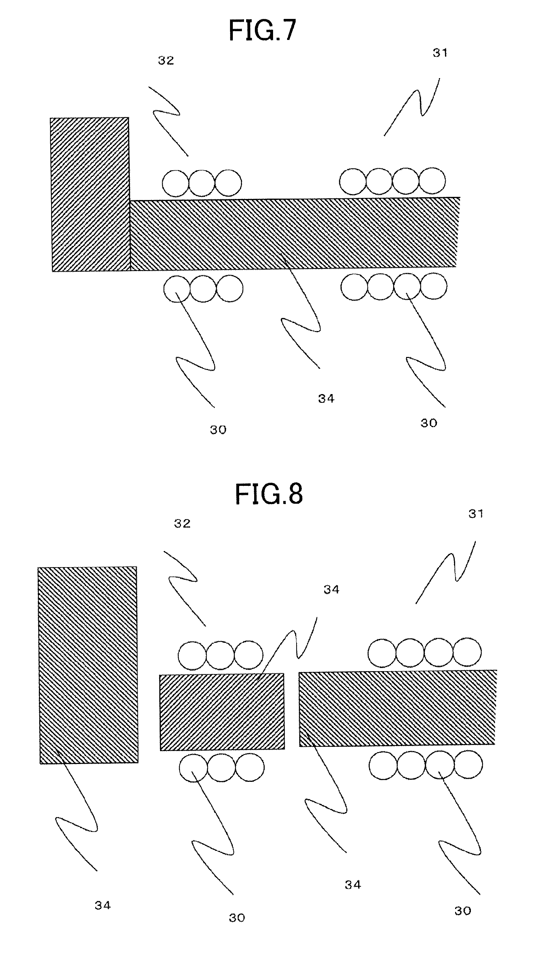

FIG. 7 illustrates that the end of the core 34 of FIG. 6 extends upward (toward the vehicle-side coil). In this configuration, most of the magnetic flux generated by the core 34 flows upward along the shape of the core 34. This leads to a further reduction in the leakage magnetic flux 41 along the winding axis of the coil (i.e., in the horizontal direction).

### Third Variation

FIG. 8 illustrates that the core 34 of FIG. 7 is divided into three. In this configuration, the magnetic flux diffuses once near the end of the core 34 of the first coil 31 and propagates along the winding axis of the coil (i.e., in the horizontal direction) as well as in the vertical direction. Similarly, a magnetic flux diffuses near the end of the core 34 of the second coil 32. The magnetic flux diffusing downward is canceled and weakened by a magnetic shield member (not shown) such as an aluminum plate. The upward magnetic flux contributes to generation of an RF electromagnetic field. The other magnetic flux propagating along the winding axis of the coil enters the last core 34. The magnetic flux entering the last core 34 is part of the magnetic flux which has diffused twice. This leads to a further reduction in the leakage magnetic flux 41 along the winding axis of the coil (i.e., in the horizontal direction).

### Fourth Variation

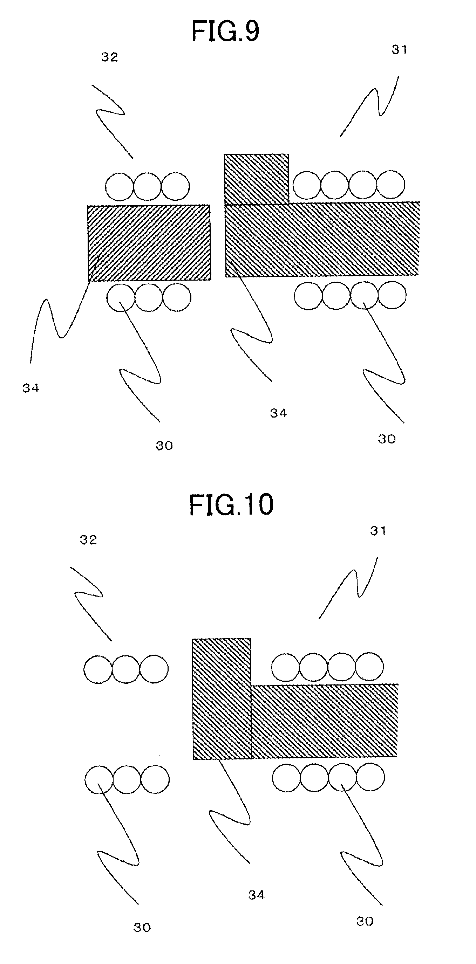

FIG. 9 illustrates that the upward extension of the core 34 according to FIG. 7 is located between the first and second coils 31 and 32. In this configuration, most of the magnetic flux is transmitted upward and then diffused. This leads to a further reduction in the leakage magnetic flux 41 along the winding axis of the coil (i.e., in the horizontal direction).

Note that the core 34 at the end shown in FIG. 8, and the core 34 of the second coil 32 shown in FIG. 9 extend downward to reach a lower level than the bottom of the core 34 of the first coil 31. In this case, the magnetic flux diffusing downward is canceled to an even greater degree.

However, the core 34 is not necessarily shifted. Even if all cores 34 are arranged at the same level, the advantages of the present invention are achievable sufficiently.

### Fifth Variation

FIG. 10 illustrates that the core of the second coil 32 in FIG. 9 is removed. Similar to the other variations, this configuration also reduces the leakage magnetic flux 41 along the winding axis of the coil (i.e., in the horizontal direction).

### Sixth Variation

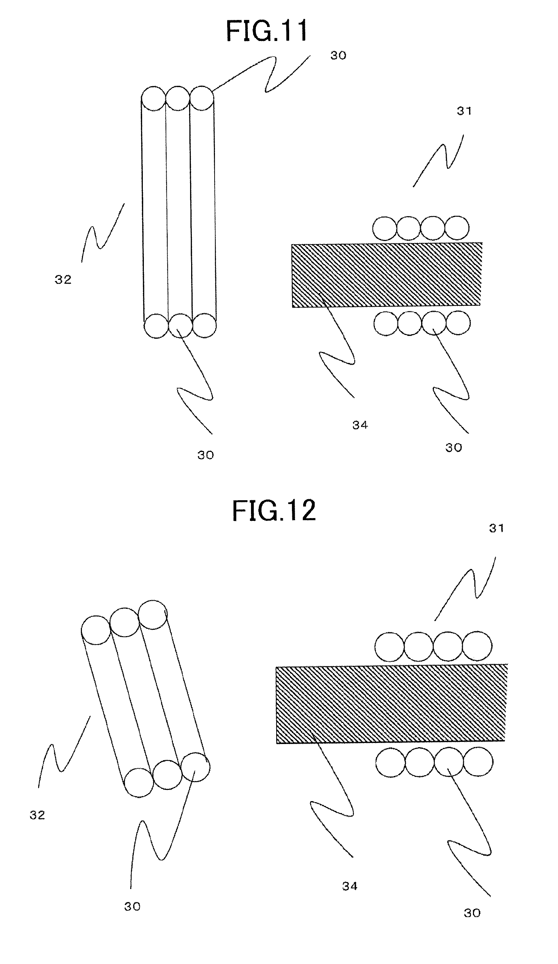

FIG. 11 illustrates that the second coil 32 is greater than the first coil 31. In this configuration, the second coil 32 has a wider area at the winding center than the first coil 31. Thus, the axial magnetic flux generated by the first coil 31 is canceled in a wider area, thereby further reducing the leakage magnetic flux 41 along the winding axis of the first coil 31 (in the horizontal direction). The central winding axes of the first and second coils 31 and 32 do not necessarily agree with each other. If at least inner winding areas partially overlap with each other as viewed along the central winding axes of the coils, the leakage magnetic flux 41 is canceled along the winding axis of the first coil 31 (i.e., in the horizontal direction).

That is to say, the second coil 32 is preferably arranged such that at least a portion of the inner area of the second coil 32 overlaps with the inner area of the first coil 31 as viewed along the winding axes of the coils.

### Seventh Variation

FIG. 12 illustrates that a second coil 32 is inclined. This configuration is useful, for example, when the magnetic flux needs to be reduced slightly below the axis of the first coil 31 to reduce the heat to be generated by a magnetic shield plate made of a non-magnetic material.

### Eighth Variation

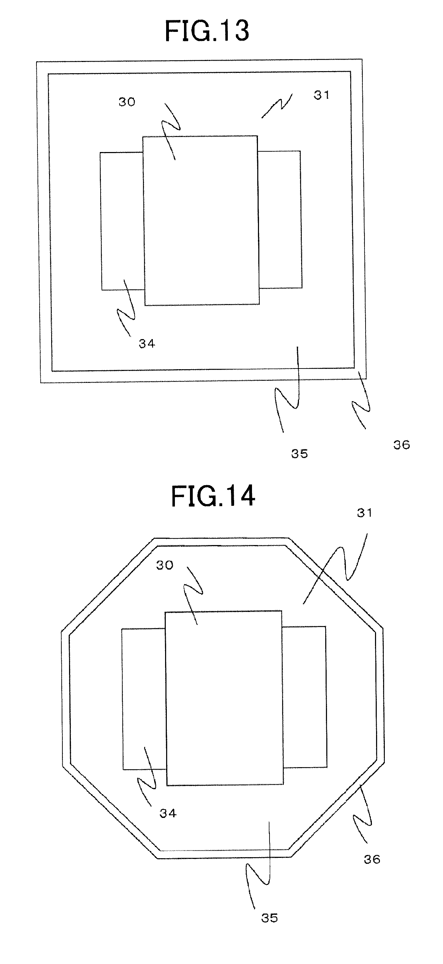

FIGS. 13-16 illustrate variations of the non-magnetic plate 35 and the non-magnetic walls 36 shown in FIG. 3.

FIGS. 13 and 14 illustrate that the non-magnetic plate 35 and the non-magnetic walls 36 are formed in a square shape and an octagonal shape, respectively, and surround the first coil 31. In either case, a leakage magnetic flux is reduced efficiently when the non-magnetic plate 35 and the non-magnetic walls 36 face the diffusing magnetic flux.

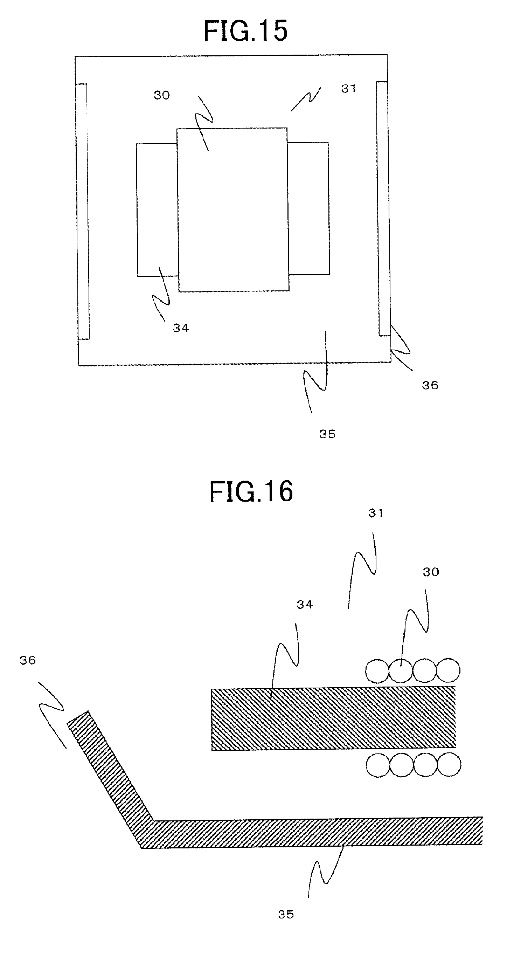

Alternatively, as shown in FIG. 15, the non-magnetic walls 36 may be provided only in a direction with a lot of leakage magnetic flux. Even so, the leakage magnetic flux is still reducible.

FIG. 16 illustrates that the non-magnetic walls 36 are inclined. This configuration is effective at forming a broader RF electromagnetic field for power transmission to cope with misalignment, for example. This configuration is implementable by providing the non-magnetic walls 36 in such a direction that broadens the range of the magnetic flux coming from the end of the first coil 31.

The heights and positions of the non-magnetic walls 36 are not necessarily uniform, and may be changed depending on the situation of installation or any other factor.

FIGS. 13-16 show no second coil 32. However, no matter where the second coil 32 is arranged inside or outside the non-magnetic wall 36, the same advantage of reducing the leakage magnetic flux of the first coil 31 is always achieved.

In the foregoing description of the embodiments and variations, an example has been described where the ground-side coil unit 12 of the power supplier 2 includes a plurality of first coils 31, second coils 32, non-magnetic plates 35, and non-magnetic walls 36. However, this is only an example and the present invention is not limited to such a specific example. Alternatively, for example, the vehicle-side coil unit 18 of the power receiver 4 may include a plurality of first coils 31, second coils 32, non-magnetic plates 35, and non-magnetic walls 36. Furthermore, the ground-side coil unit 12 of the power supplier 2 and the vehicle-side coil unit 18 of the power receiver 4 may include a plurality of first coils 31, second coils 32, non-magnetic plates 35, and non-magnetic walls 36.

In FIG. 3, the second coils 32 wound in the different directions from that of the first coil 31 are provided on both right and left sides of the first coil 31. However, only one of the second coils 32 may be provided on one side. One second coil 32 wound in a different direction from the first coil 31 may be provided on one of the right and left sides of the first coil 31, and another second coil 32 wound in the same direction as the first coil 31 may be provided on the other side to control inductance of the first coil 31.

While the core 34 shown in FIGS. 3-16 are formed in a polygonal shape, for example, the core 34 may also be formed in any other shape such as a cylindrical shape.

Any of the various embodiments described above may be combined as appropriate to achieve their advantages in combination.

### INDUSTRIAL APPLICABILITY

A non-contact power transmission system according to the present invention is useful as, for example, a power receiver and a power supplier of an electric propulsion vehicle, which may be incautiously accessed by a human or an object.

### DESCRIPTION OF REFERENCE CHARACTERS

- 2: Power Supplier
- 4: Power Receiver
- 6: Commercial Power Supply
- 8: Power Unit
- 10: Inverter Section
- 12: Ground-Side Coil Unit (Power Transmitting Coil)
- 16: Supplier-Side controller
- 17: Power Control Section
- 18: Vehicle-Side Coil Unit (Power Receiving Coil)
- 20: Rectifier
- 22: Battery
- 24: Receiver-Side Controller
- 30: Wire
- 31: First Coil
- 32: Second Coil
- 34: Core
- 35: Non-Magnetic Plate
- 36: Non-Magnetic Wall
- 40: Magnetic Flux
- 41: Leakage Magnetic Flux
- 42: Reverse Magnetic Flux

## Claims

1. A non-contact power transmission system transmitting electric power from a power transmitting coil to a power receiving coil via a non-contact method by utilizing electromagnetic induction, wherein
at least one of the power transmitting and receiving coils includes
a first coil wound with a wire, and
a second coil placed at at least one end of a winding axis of the first coil
and wound with a wire, and
the second coil is arranged such that magnetic fluxes generated along respective winding axes of the first and second coils are oriented in opposite directions.

2. The non-contact power transmission system of claim 1, wherein
the winding axes of the first and second coils substantially agree with each other, and
the wires of the first and second coils are wound in opposite directions.

3. The non-contact power transmission system of claim 1, wherein
the winding axes of the first and second coils substantially agree with each other,
the wires of the first and second coils are wound in an identical direction, and currents flow in opposite directions through the wires of the first and second coils.

4. The non-contact power transmission system of claim 1, wherein
in the first coil, the wire is wound around a core.

5. The non-contact power transmission system of claim 1, wherein
the first and second coils are wound with an identical wire.

6. The non-contact power transmission system of claim 1, wherein
the second coil is arranged such that at least a portion of an inner area of the second coil overlaps with an inner area of the first coil as viewed along the winding axes of the coils.

7. The non-contact power transmission system of claim 2, wherein
currents flowing through the wires of the first and second coils are in different phases.

8. The non-contact power transmission system of claim 1, wherein
a non-magnetic wall is provided along an outer periphery of the first coil so as to be substantially perpendicular to the winding axis of the first coil.

9. The non-contact power transmission system of claim 8, wherein
another non-magnetic wall is provided on side portions of the first and second coils on opposite sides to a region where the power transmitting coil faces the power receiving coil so as to be substantially parallel to the respective winding axes of the first and second coils, and
the non-magnetic wall substantially perpendicular to the winding axis is electrically connected to the another non-magnetic wall substantially parallel to the winding axes.

10. The non-contact power transmission system of claim 1, wherein
a non-magnetic wall substantially perpendicular to the winding axis surrounds a periphery of the first coil, and is electrically connected to another non-magnetic wall.
